# EUROPEAN PATENT APPLICATION

(11) **EP 3 444 173 A1**
(43) Date of publication of application: **20.02.2019**
(21) Application number: 17186648.6
(22) Date of filing: 17.08.2017
(51) Int. Cl.: B62H 5/20, H04L 29/08

(54) **PUBLIC BIKE SHARING SYSTEM**

(71) Applicant: MOBIT BELGIUM, besloten vennootschap met beperkte aansprakelijkheid, 9940 Evergem (BE)
(72) Inventor: DE GROOTE, Bernard, 9940 Evergem (BE); HUAN, Chen, Beijing, Beijing 100000 (CN)
(74) Representative: Donné, Eddy

(57) **Abstract**

The invention relates to a smart lock (1) for a vehicle comprising a GPS module, an unlock module, a communication module and an power supply unit, said smart lock (1) being able to be unlocked via a user APP on a smartphone or computer (2) whereby the communication module makes use of the communication means of the smartphone or computer (2) when in connection to the smart lock (1). The invention also relates to a public bike sharing system and to a method of communicating between a smart lock (1) and a smart lock server (3) in driving mode.

## Description

The present invention relates to a public bike-sharing system where a pool of bicycles is made available to the public or to a specific group of people. The invention can be broadened to a public vehicle sharing system, not just limiting to a bicycle.

Such a public bike-sharing system is generally known for example in cities where a bicycle can be taken from a dedicated bicycle storage unit at specific locations. Typically, the bicycle is locked to a dedicated storage unit.

Another known bike sharing system is a "stationless free-flow bike-sharing system", where a bicycle can be found via a dedicated user application or "APP". A person wanting to use a bike opens a bike-sharing user APP and looks on a map for available bikes nearby or in the area he wants to start a ride. The user APP typically communicates with a cloud server. The APP guides the person towards a chosen bike. The bike QR code is scanned by the user APP. The lock opens and the person can take the bike for a ride. After use, the bike can be locked and parked freely on a legal parking location in the city.

A typical stationless free-flow bike-sharing system is disclosed in CN106327699 as an internet of things-based smart bike public management system, comprising a background cloud server, smart parking spaces, control modules and bike borrowing information identification modules arranged on the bike bodies, the smart parking spaces comprise non-motor vehicle parking areas arranged in cities, the bike borrowing information identification modules comprise bus card identification units, face identification units, citizen card identification units, fingerprint identification units and identity card identification units; the control modules are connected with the background cloud server through a mobile network; the bike borrowing information identification modules are connected with the control modules through human-computer interaction units; smart lock units are provided with driving units.

Another stationless free-flow bike-sharing system is discloses in CN105354935 as a public bicycle renting system based on internet of things and is used for solving problems with respect to a conventional public bicycle renting system based on locking devices of a fixed site, wherein the number of parking piles is not matched with the number of bicycles needing to be parked, and therefore the public bicycle renting system is not convenient to use, low in card popularizing rate, high in maintenance cost and the like. A vehicular controller is designed and a mobile phone client is used for managing the rental of public bicycles through the mobile internet.

It is, however, a disadvantage that the battery or power supply unit of the smart lock on the bicycle is used for the communication between the smart lock and the server, thereby consuming a lot of battery power. Insufficient battery power means that the bicycle can possibly not be unlocked. This also means that the bicycle may "disappear" since the GPS also does not work anymore.

The purpose of the present invention is to provide a solution to one or more of the aforementioned and other disadvantages.

To this end the invention concerns a smart lock for a vehicle comprising a GPS module, an unlock module, a communication module and an power supply unit, said smart lock being able to be unlocked via a user APP on a smartphone or computer and to communicate with a vehicle server, characterised in that the communication module makes use of the communication means of the smartphone or computer to communicate with the vehicle server.

According to a preferred embodiment, the communication means between the smart lock and the smartphone or computer is a Bluetooth connection.

The smart lock allows for a stationless free-flow vehicle-sharing concept

The advantage are that the battery or power supply of the smart lock on the bicycle is only used for the communication between the smart lock and the server when the bicycle is in parked/standby position and no user has rented a bicycle. As such there is a minimum loss of battery power. If the power supply turns very low or dead, a message can be sent via the user APP to the server that power maintenance and reload is needed.

In this way a smartphone, with the user APP, is used as the communicator of the GPS data from the ride to the server. Using a Bluetooth connection between the smart lock and the smartphone results or this purpose in less power consumption of the smart lock.

During the ride, when the user is nearby the bicycle, communication between the smart lock and the telecom provider/server is replaced by a direct communication between the smart lock and the smartphone (Bluetooth connection) to/from the telecom provider/server.

According to an important embodiment, GPS data from the vehicle is sent to the server via the connected smartphone or computer.

This is different from the prior art solution where the GPS data from the smart lock is sent over a GPRS/4G connection thereby using the power supply (battery) of the smart lock. As such, the battery is relieved from using excess power. The power supply of the smart lock is only needed when the bike is in standby mode, which is when no user is renting the bike. In case a user is renting the bike and in driving mode, the smart lock is not consuming any power of its own to communicate with the public bike sharing server or with the user APP.

In a specific embodiment the communication with the smartphone or computer and as such the empowerment via the smartphone or computer is used in driving mode, that is when a user or user app is in the neighbourhood of the vehicle (when setting up communication and/or unlocking or locking the vehicle for example) and when the user is using or driving the vehicle.

In another specific embodiment GPRS communication is used in standby mode, that is when the vehicle is waiting for a user and stands still at a certain location.

The unlock command from the back office server via the telecom provider is sent directly to the smartphone (user APP). The smartphone (user APP) then communicates the unlock command to the smart lock and unlocks the bicycle.

According to a special embodiment, GPRS communication is available if the communication network or the power supply of the smartphone or computer fails. In that case, the smart lock always remains in communication with the server.

According to a preferred embodiment, the vehicle is a bicycle, a scooter, a segway or any other personal transport vehicle.

In a second aspect, the invention relates to a vehicle comprising a smart lock as described above.

In a third aspect, the invention relates to the use of a smart lock as described above in a public vehicle sharing system.

In a fourth aspect, the invention relates to a public vehicle sharing system comprising multiple vehicles each having a smart lock as described above, whereby the vehicles are stationed anywhere within a predefined area in standby mode.

More Specifically the invention relates to the public bicycle sharing system wherein the vehicles are bicycles having a smart lock.

According to a preferred embodiment, the smart lock server is alarmed when the vehicle is located outside the predefined area.

This would be the case when the vehicle has gone too far. On that case, a maintenance team would have to come and pick up the vehicle, or the user can be fined if he doesn't bring the vehicle back in a predefined area.

According to another preferred embodiment, the GPS data of the vehicle is regularly sent to or poked by the smart lock server. As such, the server knows at any time where the vehicle is located.

In a specific embodiment, the smart locks communicate via the smartphone or computer in driving mode, as explained earlier.

In a fifth aspect, the invention relates to a method of unlocking a smart lock as set out here above comprising the steps of: a) making communication with a smart lock server via a user APP on a smartphone or computer and locating a smart lock, b) receiving an unlock command from the server, and c) sending the unlock command from the user APP to the smart lock.

In a sixth aspect, the invention relates to a method of communicating between a smart lock and a smart lock server in driving mode as set out earlier, comprising the steps of: a) making communication with a smart lock server via a user APP on a smartphone or computer and locating a smart lock, b) making communication between the smart lock and the user APP, and c) sending GPS data from the smart lock to the smart lock server via the smartphone or computer communication means.

With the intention of better showing the characteristics of the invention, a preferred embodiment of a public bike sharing system according to the invention is described hereinafter, by way of an example without any limiting nature, with reference to the accompanying drawings, wherein:
figure 1 shows a standard (prior art) solution for driving mode;
figure 2 shows a standard (prior art) solution for standby mode; and
figure 3 shows an advanced solution for driving mode according to the invention.

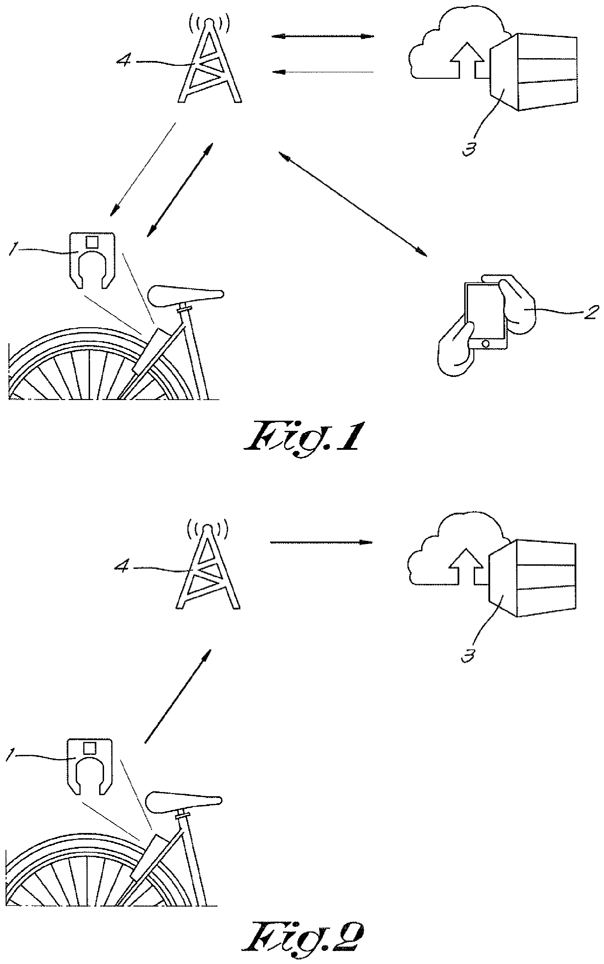

As known in the prior art figure 1 shows a standard solution of communication between a smart lock 1 and a bike-sharing server 3 in driving mode.

A request to use a bicycle is sent by a dedicated user APP 2 via a telecom provider 4 to a back office server 3. An unlock command is communicated back from the back office server 3 via the telecom provider 4 to the smart lock 1. The smart lock 1 sends GPS data over a GPRS/4G connection via the telecom provider 4 to the back office server 3.

Figure 2 shows a standard solution of communication between a smart lock 1 and a bike sharing server 3 in standby mode as known in the prior art.

In standby mode GPS data over a GPRS/4G connection is communicated from the smart lock 1 to a telecom provider 4, and further communicated to a dedicated bike sharing back office server 3. As such, the system knows at all times where a bicycle is located.

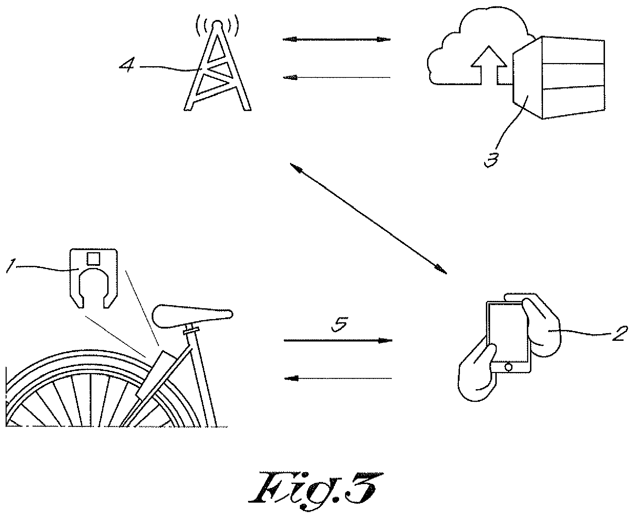

A problem with these two examples is that the battery of the smart lock 1 is used for the GPRS communication, which is consuming a lot of power. To limit the risk of power loss the invention is set out in figure 3.

The Communication protocol between Smart lock and Back office, via the smartphone of the user, will follow the next steps:
- The user will locate a bicycle with the user APP on his smartphone.
- The user will scan the unique QR code on the bike
- After the user scanned the QR code, the mobile APP sends by GPRS the smart lock ID that is contained in the QR code to the backend server.
- This request will ask to the backend server if the bike is free to ride
- If the bike is free to ride, the dedicated bike sharing back office server will replies via the Smartphone BlueTooth communication to the Smart lock, with the key and password of the Bluetooth module in the smart lock
- With the Bluetooth key/password pair, the mobile APP can build a Bluetooth communication channel with the smart lock. The smart lock is opened by the command sent from the mobile APP via Bluetooth.
- The User can start his ride
- As from this point, the location info of the user's smartphone will be used as the location of the smart lock. The communication between the lock and the backend server is replaced by the communication between the smartphone and backend server.
- When the user stops his ride by closing the Smart lock, the smart lock will send a message via the Smartphone Bluetooth communication to the dedicated bike sharing back office server to change the status of the bike in 'ready to ride'
- All info related with the smart lock is queried by the mobile APP via the Bluetooth channel, and then forwarded to the backend server.

In driving mode, that is when the user has unlocked the vehicle and is driving the vehicle, the smartphone or computer 2 stays in connection with the smart lock 1. As such, the GPS data from the vehicle's smart lock 1 is sent via a Bluetooth connection 5 to the smartphone or computer 2, which in turn sends the GPS data to a back office server 3 via a telecom provider 4.

The communication module of the smart lock 1 stops using GPRS/4G connection and makes use of the communication means of the smartphone or computer 2.

The smartphone or computer 2 is not only used for unlocking the smart lock 1 but also for communicating with the smart lock 1 during the ride, and specifically for letting the smart lock 1 communicate with the back office server 3.

The unlock command from the back office server 3 via the telecom provider 4 is sent directly to the smartphone 2(user app). The smartphone 2(user APP)then communicates the unlock command to the smart lock 1 and unlocks the bicycle.

The present invention is by no means limited to the embodiments described as an example and shown in the drawings, but a public bike sharing system according to the invention can be realised in all kinds of forms and dimensions without departing from the scope of the invention.

## Claims

1. Smart lock (1) for a vehicle comprising a GPS module, an unlock module, a communication module and a power supply unit, said smart lock (1) being able to be unlocked via a user APP on a smartphone or computer (2) and to communicate with a vehicle server (3), **characterised in that** the communication module makes use of the communication means of the smartphone or computer (2) to communicate with the vehicle server (3).

2. Smart lock (1) according to claim 1, **characterised in that** the communication means between the smart lock (1) and the smartphone or computer (2) is a Bluetooth connection (5).

3. Smart lock (1) according to claim 1 or 2, **characterised in that** GPS data from the vehicle to the server (3) is sent via the Bluetooth connected smartphone or computer (2).

4. Smart lock (1) according to any of the previous claims, **characterised in that** the communication via the smartphone or computer (2)is used in driving mode.

5. Smart lock (1) according to any of the previous claims, **characterised in that** GPRS communication for sending GPS data from the vehicle to the server (3) is used in standby mode.

6. Smart lock (1) according to any of the previous claims, **characterised in that** GPRS communication is available in case the communication network or the power supply of the smartphone or computer (2) fails.

7. Smart lock (1) according to any of the previous claims, **characterised in that** the vehicle is a bicycle, a scooter, a segway or any other personal transporter.

8. Vehicle comprising a smart lock (1) of any of claims 1 to 7.

9. Use of a smart lock (1) of any of claims 1 to 7 in a public vehicle sharing system.

10. Public vehicle sharing system comprising multiple vehicles each having a smart lock (1) according to claims 1 to 7, **characterised in that** the vehicles are stationed anywhere within a predefined area in standby mode.

11. Public vehicle sharing system according to claim 10, **characterised in that** the smart lock server (3) is alarmed when the vehicle is located outside the predefined area.

12. Public vehicle sharing system according to claim 10 or 11, **characterised in that** the GPS data of the vehicles is regularly sent to or poked by the smart lock server (3).

13. Public vehicle sharing system according to any of claims 10 to 12, **characterised in that** in driving mode the smart locks communicate via the smartphone or computer (2).

14. Method of unlocking a smart lock (1) according to any of claims 1 to 7, comprising the steps of:
a. Making communication with a smart lock server (3) via a user APP on a smartphone or computer (2) and locating a smart lock,
b. Receiving an unlock command from the server (3),
c. Sending the unlock command from the user app to the smart lock.

15. Method of communicating between a smart lock (1) and a smart lock server (3) in driving mode according to any of claims 1 to 7, comprising the steps of:
a. Making communication with a smart lock server (3) via a user app on a smartphone or computer (2) and locating a smart lock,
b. Making communication between the smart lock (1) and the user app,
c. Sending GPS data from the smart lock (1) to the smart lock server (3) via the smartphone or computer (2) communication means.
